# EUROPÄISCHE PATENTANMELDUNG

(11) **EP 0 789 158 A2**
(43) Veröffentlichungstag der Anmeldung: **13.08.1997**
(21) Anmeldenummer: 97100685.3
(22) Anmeldetag: 17.01.1997
(51) Int. Cl.: F16F 9/12

(54) **Hydraulischer Rotationsdämpfer**

(30) Priorität: 09.02.1996 DE 19604768
(71) Anmelder: TRW United-Carr GmbH & Co. KG, D-67677 Enkenbach-Alsenborn (DE)
(72) Erfinder: Fischbach, Jean-Claude, 67340 Ingwiller (FR); Klein, Jean-Luc René Georges, 67350 Ringendorf (FR)
(74) Vertreter: Schieschke, Klaus, Dipl.-Ing.

(57) **Zusammenfassung**

Die Erfindung bezieht sich auf einen Rotationsdämpfer 1, mit einem Gehäuse 2, innerhalb welchem ein Rotor 3 in Form einer Zylinderscheibe 4 angeordnet ist, wobei sich in einem Zwischenraum 5 zwischen dem Rotor 3 und dem Gehäuse 2 ein viskoses Medium 6 befindet und wobei eine mit dem Rotor 3 verbundene Welle 7 über eine das Gehäuse 2 übergreifende Abdeckplatte hinausragt. Erfindungsgemäß ist zumindest ein Teil einer Stirnfläche 9 der Zylinderscheibe 4 des Rotors 2 und zumindest ein Teil der dieser Stirnfläche 9 zugeordneten Seite 10 des Gehäuses 2 als Labyrinth 11 mit Erhöhungen 12 und Vertiefungen 13 ausgebildet und definiert zumindest einen Teil des Zwischenraumes 5.

## Beschreibung

Die Erfindung bezieht sich auf einen Rotationsdämpfer, mit einem Gehäuse, innerhalb welchem ein Rotor in Form einer Zylinderscheibe angeordnet ist, wobei sich in einem Zwischenraum zwischen dem Rotor und dem Gehäuse ein viskoses Medium befindet und wobei eine mit dem Rotor verbundene Welle über eine das Gehäuse übergreifende Abdeckplatte hinausragt.

Als Stand der Technik ist bereits ein derartiger Rotationsdämpfer bekannt, bei welchem das Gehäuse an seinem Außenumfang mit einem Zahnradteil versehen ist, wobei die Welle des Rotors über eine Kappe hinausragt (DE 43 15 294 A1). Die Kappe ist hierbei hinter einem Vorsprung des Gehäuses verriegelt und befindet sich zwischen einer Abdichtscheibe und einer der Welle zugekehrten Stirnfläche des Rotors. Die der Welle abgekehrte Stirnfläche des Rotors ist mit einem Zwischenraum ausgestattet, in welchem sich viskoses Medium befindet. Dieser Zwischenraum kann entweder in Form einer geschlossenen Scheibe oder eines Ringes gestaltet sein. Infolge des kleinen Zwischenraumes zur Aufnahme des viskosen Mediums ist damit die Dämpfungswirkung relativ gering.

Zum Stand der Technik zählt weiterhin ein Rotationsdämpfer, bei welchem eine Spiralfeder zwischen einer inneren Begrenzungsfläche der zylindrischen Wand des Gehäuses und einer äußeren Begrenzungsfläche des zylindrischen Rotors angeordnet ist (DE 38 21 982 A1). Diese Anordnung ist bauaufwendig gestaltet, da der Rotor und die entsprechenden benachbarten Teile sowohl die Spiralfeder führen müssen, als auch den Zwischenraum zur Aufnahme des viskosen Mediums erfordern.

Demgegenüber liegt der vorliegenden Erfindung die Aufgabe zugrunde, eine Konstruktion der eingangs genannten Art zu schaffen, welche bei einfacherem Aufbau eine verbesserte Dämpfungswirkung aufweist.

Diese Aufgabe wird erfindungsgemäß dadurch gelöst, daß zumindest ein Teil einer Stirnfläche der Zylinderscheibe des Rotors und zumindest ein Teil der dieser Stirnfläche zugeordneten Seite des Gehäuses als Labyrinth mit Erhöhungen und Vertiefungen ausgebildet ist und zumindest einen Teil des Zwischenraumes definiert. Hierdurch ergibt sich der Vorteil, daß durch die Gestaltung des Zwischenraumes als Labyrinth mehr viskoses Medium zwischen dem Gehäuse und dem Rotor eingebracht werden kann, wodurch auf einfache Weise eine Erhöhung der Dämpfungswirkung erzielt wird.

In weiterer Ausgestaltung der Erfindung können die Erhöhungen und die Vertiefungen des Labyrinths konzentrisch zur Längsachse der Zylinderscheibe des Rotors und der Welle verlaufen. Weiterhin können diese äquidistant zur Längsachse des Rotors liegen.

Die Erhöhungen und die Vertiefungen können entweder gleiche oder unterschiedliche Breite aufweisen. Darüberhinaus besteht die Möglichkeit, daß die Erhöhungen und die Vertiefungen des Labyrinths im Querschnitt rechteckig, polygonal, gewellt oder dreieckig ausgebildet sind. Weiterhin kann die Tiefe der Vertiefungen und/oder die Höhe der Erhöhungen im Labyrinth gleich oder unterschiedlich sein.

In weiterer Ausgestaltung der Erfindung kann die als Labyrinth gestaltete Stirnfläche des Rotors der die Abdeckplatte durchsetzenden Welle abgekehrt sein.

Zur Vergrößerung des Aufnahmevolumens des Zwischenraumes kann sich der mit dem viskosen Medium gefüllte Zwischenraum über das Labyrinth hinaus zu dem äußeren Umfang der Zylinderscheibe des Rotors erstrecken und darüberhinaus auch über zumindest einen Teil der der Welle zugekehrten Stirnfläche der Zylinderscheibe des Rotors verlaufen.

Zur Verbesserung der Lagerung des Rotors trotz Verwendung des Labyrinths kann die Stirnfläche des Rotors im mittleren und äußeren Bereich dieses Labyrinth aufweisen und im zentrischen Bereich mit einem im Gehäuse gelagerten Wellenzapfen versehen sein.

Die Erfindung wird nachfolgend anhand eines in der Zeichnung dargestellten Ausführungsbeispiels näher beschrieben. In der Zeichnung zeigen:
- Fig. 1: einen Schnitt gemäß der Linie II-II in Fig. 2 und
- Fig. 2: eine Draufsicht auf einen Rotationsdämpfer in geschlossenem Zustand.

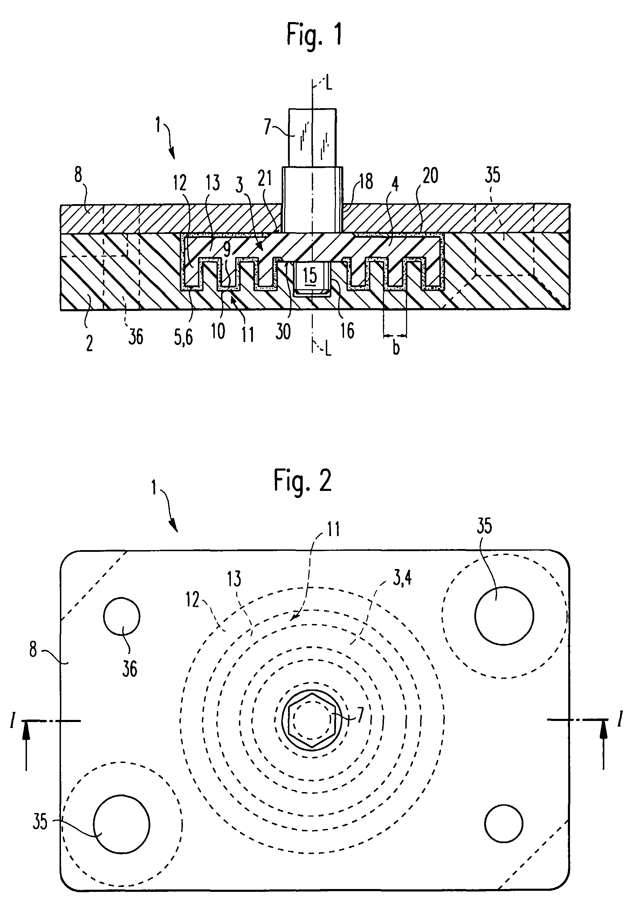

Der in Fig. 1 und 2 dargestellte Rotationsdämpfer 1 besteht im wesentlichen aus einem Gehäuse 2, innerhalb welchem ein Rotor 3 angeordnet ist. Dieser Rotor 3 ist in Form einer Zylinderscheibe 4 gestaltet, wobei an eine Stirnfläche 20 der Zylinderscheibe 4 eine Welle 7 anschließt, die über eine Öffnung 18 eine Abdeckplatte 8 durchsetzt. Diese Abdeckplatte 8 ist an dem Gehäuse 2 mit Hilfe zweier nicht näher dargestellter Schraubenverbindungen befestigt, welche vorzugsweise in einander diagonal gegenüberliegenden Bohrungen 35 nach Fig. 2 angeordnet sind. Darüberhinaus sind Bohrungen 36 vorgesehen, welche zur Befestigung des erfindungsgemäßen Rotationsdämpfers an einem nicht näher dargestellten Teil dienen.

Der Rotor 3 und/oder das Gehäuse 2 können z.B. aus Ölharz bestehen, wodurch eine weitere Verbesserung der Dämpfung erzielt wird.

Bei dem in der Zeichnung dargestellten Ausführungsbeispiel weist eine der Abdeckplatte 8 abgekehrte Stirnfläche 9 des Rotors 3 und eine dieser zugeordnete Stirnfläche 10 des Gehäuses 2 ein Labyrinth 11 auf, welches mit Erhöhungen 12 und Vertiefungen 13 versehen ist. Dieses Labyrinth 11 definiert einen Zwischenraum 5, in welchem sich ein viskoses Medium 6 befindet.

Die Erhöhungen 12 und die Vertiefungen 13 des Labyrinths 11 verlaufen konzentrisch zu einer Längsachse L-L der Zylinderscheibe 4 des Rotors 3 und der Welle 7. Bei dem in der Zeichnung dargestellten Ausführungsbeispiel verlaufen sie darüber hinaus äquidistant zu dieser Längsachse.

Die Erhöhungen 12 und die Vertiefungen 13 des Labyrinths 11 können die gleiche Breite b aufweisen und im Querschnitt rechteckig ausgebildet sein. Hierbei kann außerdem die Tiefe der Vertiefungen 13 und die Höhe der Erhöhungen 12 im Labyrinth 11 gleich sein.

In nicht näher dargestellten Ausführungsformen ist es auch möglich, daß die Erhöhungen und/oder Vertiefungen des Labyrinths 11 unterschiedliche Breite aufweisen, im Querschnitt polygonal, gewellt oder dreieckig ausgebildet sind, wobei außerdem die Tiefe der Vertiefungen und/oder die Höhe der Erhöhungen unterschiedlich sein kann.

Wie insbesondere aus Fig. 1 hervorgeht, weist die der Seite 10 des Gehäuses 2 zugeordnete Stirnfläche 9 des Rotors 3 das Labyrinth 11 im mittleren und äußeren Bereich auf. Im zentrischen Bereich ist der Rotor 3 mit einem im Gehäuse 2 gelagerten Wellenzapfen 15 versehen. Hierzu weist das Gehäuse 2 eine Lagerbohrung 16 auf, welche zur Aufnahme des Wellenzapfens 15 dient.

Aus Fig. 1 ist darüberhinaus erkennbar, daß sich der mit dem viskosen Medium 6 gefüllte Zwischenraum 5 über das Labyrinth 11 hinaus zu dem äußeren Umfang der Zylinderscheibe 4 des Rotors 3 erstreckt und darüberhinaus über zumindest einen Teil der der Welle 7 zugekehrten Stirnfläche 20 der Zylinderscheibe 4 des Rotors 3 verlaufen kann. Zwischen dem Umfang der Welle 7 und dem Endbereich des Zwischenraums 5 kann sich ein Trennbereich 21 befinden. Analog kann sich zwischen dem Endbereich des Labyrinths 11 und dem Umfang des Wellenzapfens 15 ein gegenüberliegender Trennbereich 30 befinden.

In den Trennbereichen 21 bzw. 30 können nicht näher dargestellte Dichtungen angeordnet sein, um sicherzustellen, daß das viskose Medium 6 im Labyrinth 11 bzw. in der Zone der Stirnfläche 20 verbleibt.

Durch die besondere Gestaltung des Zwischenraumes in Form des Labyrinths 11 zusätzlich mit der Erstreckung über den Außenumfang der Zylinderscheibe 4 und über zumindest einen Teil der gegenüberliegenden Stirnfläche 20 ergibt sich eine Vergrößerung des Aufnahmebereichs für viskoses Medium 6, so daß hieraus eine Verbesserung der Dämpfungswirkung bei geringem konstruktivem Aufwand resultiert.

## Patentansprüche

1. Rotationsdämpfer, mit einem Gehäuse (2), innerhalb welchem ein Rotor (3) in Form einer Zylinderscheibe (4) angeordnet ist,
wobei sich in einem Zwischenraum (5) zwischen dem Rotor (3) und dem Gehäuse (2) ein viskoses Medium (6) befindet und
wobei eine mit dem Rotor (3) verbundene Welle (7) über eine das Gehäuse (2) übergreifende Abdeckplatte (8) hinausragt,
**dadurch gekennzeichnet,**
daß zumindest ein Teil einer Stirnfläche (9) der Zylinderscheibe (4) des Rotors (2) und zumindest ein Teil der dieser Stirnfläche (9) zugeordneten Seite (10) des Gehäuses (2) als Labyrinth (11) mit Erhöhungen (12) und Vertiefungen (13) ausgebildet ist und
zumindest einen Teil des Zwischenraums (5) definiert.

2. Rotationsdämpfer nach Anspruch 1, **dadurch gekennzeichnet,** daß die Erhöhungen (12) und die Vertiefungen (13) des Labyrinths (11) konzentrisch zur Längsachse (L-L) der Zylinderscheibe (4) des Rotors (3) und der Welle (7) verlaufen.

3. Rotationsdämpfer nach Anspruch 1 und 2, **dadurch gekennzeichnet,** daß die als Labyrinth (11) gestaltete Stirnfläche (9) des Rotors (3) der die Abdeckplatte (8) durchsetzenden Welle (7) abgekehrt ist.

4. Rotationsdämpfer nach Anspruch 3, **dadurch gekennzeichnet,** daß die Stirnfläche (9) des Rotors (3) im mittleren und äußeren Bereich das Labyrinth (11) aufweist und im zentrischen Bereich mit einem im Gehäuse (2) gelagerten Wellenzapfen (15) versehen ist.

5. Rotationsdämpfer nach Anspruch 4, **dadurch gekennzeichnet,** daß zwischen dem Endbereich des Labyrinths (11) und dem Umfang des Wellenzapfens (15) ein Trennbereich (30) liegt.

6. Rotationsdämpfer nach einem der vorhergehenden Ansprüche, **dadurch gekennzeichnet,** daß sich der mit dem viskosen Medium (6) gefüllte Zwischenraum (5) über das Labyrinth (11) hinaus zu dem äußeren Umfang der Zylinderscheibe (4) des Rotors (3) erstreckt.

7. Rotationsdämpfer nach Anspruch 6, **dadurch gekennzeichnet,** daß der mit dem viskosen Medium (6) gefüllte Zwischenraum (5) sich auch über zumindest einen Teil der der Welle (7) zugekehrten Stirnfläche (20) der Zylinderscheibe (4) des Rotors (3) erstreckt.

8. Rotationsdämpfer nach Anspruch 7, **dadurch gekennzeichnet,** daß zwischen dem Umfang der Welle (7) und dem Endbereich des Zwischenraums (5) ein Trennbereich (21) liegt.

9. Rotationsdämpfer nach einem der vorhergehenden Ansprüche, **dadurch gekennzeichnet,** daß die Erhöhungen (12) und die Vertiefungen (13) des Labyrinths (11) äquidistant zur Längsachse (L-L) des Rotors (3) verlaufen.

10. Rotationsdämpfer nach Anspruch 9, **dadurch gekennzeichnet,** daß die Erhöhungen (12) und die Vertiefungen (13) des Labyrinths (11) die gleiche Breite (b) aufweisen.

11. Rotationsdämpfer nach Anspruch 1 bis 9, **dadurch gekenn zeichnet,** daß die Erhöhungen (12) und die Vertiefungen (13) des Labyrinths (11) unterschiedliche Breite aufweisen.

12. Rotationsdämpfer nach einem der vorhergehenden Ansprüche, **dadurch gekennzeichnet,** daß die Erhöhungen (12) und die Vertiefungen (13) des Labyrinths (11) im Querschnitt rechteckig, gewellt, polygonal oder dreieckig ausgebildet sind.

13. Rotationsdämpfer nach einem der vorhergehenden Ansprüche, **dadurch gekennzeichnet,** daß die Tiefe der Vertiefungen (13) und/oder die Höhe der Erhöhungen (12) im Labyrinth (11) gleich ist.

14. Rotationsdämpfer nach einem oder mehreren der Ansprüche 1 bis 12, **dadurch gekennzeichnet,** daß die Tiefe der Vertiefungen (13) und/oder die Höhe der Erhöhungen (12) des Labyrinths (11) unterschiedlich ist.

15. Rotationsdämpfer nach einem der vorhergehenden Ansprüche, **dadurch gekennzeichnet,** daß die Abdeckplatte (8) an dem Gehäuse (2) über mindestens zwei Schraubverbindungen befestigt ist.

16. Rotationsdämpfer nach Anspruch 15, **dadurch gekennzeichnet,** daß sich die Schraubenverbindungen außerhalb des Labyrinths (11) diagonal gegenüberliegen.
